# EUROPÄISCHE PATENTANMELDUNG

(11) **EP 0 636 811 A1**
(43) Veröffentlichungstag der Anmeldung: **01.02.1995**
(21) Anmeldenummer: 94111645.1
(22) Anmeldetag: 26.07.1994
(51) Int. Cl.: F16F 15/16

(54) **Drehschwingungsdämpfer mit viscosem Dämpfermedium**

(30) Priorität: 28.07.1993 DE 9311252 U
(71) Anmelder: GFS-Gesellschaft für Schwingungstechnik mbH, D-85661 Forstinning (DE)
(72) Erfinder: Möhring, Bernd, Dipl.-Ing., D-06862 Rosslau (DE); Schwarze, Antje, Dipl.-Ing., D-06862 Rosslau (DE); Schwarze, Dirk, Dipl.-Ing., D-06862 Rosslau (DE)
(74) Vertreter: Tragsdorf, Bodo, Dipl.-Ing.

(57) **Zusammenfassung**

Die Erfindung betrifft einen Drehschwingungsdämpfer mit viscosem Deämpermedium, insbesonder für Kolbenmaschinen.
Ausgehend von den Nachteilen des bekannten Standes der Technik soll ein Drehschwingungsdämpfer mit viscosem Dämpfermedium geschaffen werden, der sich durch einen einfachen konstruktiven Aufbau auszeichnet, leicht zu montieren ist, den Einbau zusätzlicher Abstimmelemente ohne zusätzliche Abdichtung ermöglicht und bei dem sich die Verdrängerwirkung des Dämpfermediums nicht auf die Funktion der Abstimmelemente auswirkt.
Als Lösung wird vorgeschlagen, daß die Abstimmelemente 2, 2', 3, 3', 18, 21 auf einem kleineren Radius als der Spaltraum 23, 23' angeordnet sind und aus Ringsegmenten 2, 2', 3, 3' bestehen, die versetzt zueinander, alternierend an dem Nabenteil 1. 1' und der Schwungmasse 4, 4', 5, 6 in einem Abstand zueinander angeordnet sind. Zwischen den Ringsegementen ist ein elastisches Element angeordnet, das an mindestens einem der Ringsegmente befestigt ist. Der Spaltraum ist mit einem Ausgleichsraum 24 zur Aufnahme von im Betriebszustand aus diesem entweichendem Fluid verbunden, und das Füllvolumen des im Drehschwingungsdämpfer befindlichen viscosen Fluids entspricht dem Volumen des Spaltraumes.
Als elastisches Element kann zwischen den Ringsegmenten eine Feder angeordnet sein. Die Feder ist z.B. als Druckfeder 21 ausgebildet und auf einem Dorn 18 geführt, der an dem Ringsegement 3, 3' befestigt ist. In der Praxis hat es sich als vorteilhaft erwiesen, wenn jeweils an den beiden Seiten des Ringsegmentes ein Dorn befestigt ist. Als radiales Lager für die Schwungmasse ist zwischen dem Nabenteil und der Schwungmasse ein Lagerband 8, 8' schwimmend angeordnet.

## Beschreibung

Die Erfindung betrifft einen Drehschwingungsdämpfer mit viscosem Dämpfermedium, insbesondere für Kolbenmaschinen.

Derartige Drehschwingungsdämpfer bestehen aus einer Schwungmasse, die von einem viscosem Dämpfermedium umgeben ist und in einem hermetisch geschlossenen Gehäuse drehelastisch gelagert ist, wobei das Nabenteil des Gehäuses an der zu dämpfenden Welle befestigt ist. Die Kopplung von Nabenteil und Schwungmasse erfolgt bei bekannten Viscositätsdrehschwingungsdämpfern über hochviscoses Silikonöl. Um eine bessere Abstimmung solcher Dämpfer zu erreichen, werden zusätzliche Federelemente eingesetzt, wie z.B. Biegefedern (DE-OS 30 20 993) oder Schraubenfedern (DE-OS 29 12 090). Dabei kommt es durch die hohe Geschwindigkeit, mit der das Silikonöl im Arbeitsbereich der Federn verdrängt werden muß, zu einer unkontrollierbaren Vergrößerung der Federsteifigkeit im Dämpfer. Das zieht eine zusätzliche Temperaturerhöhung und damit eine ungünstige Beeinflussung der stark temperaturabhängigen Eigenschaften des Silikonöls nach sich. Zusätzlich ist bei Drehschwingungsdämpfern mit Biegefedern noch von Nachteil, daß die Sekundärmasse radial nicht genau geführt werden kann, so daß für die axiale Führung zusätzliche Bauelemente erforderlich sind. Außerdem sind diese Dämpfer in ihrer Herstellung und Montage sehr aufwendig. Eine Trennung von Biegefedern und Dämpfungsmedium, um die unerwünschte Verdrängungswirkung des Dämpfungsmediums zu eliminieren, ist sehr aufwendig und erfordert zusätzlichen Bauraum. Eine andere Möglichkeit besteht darin, die Federelemente vom hochviscosen Medium dadurch freizuhalten, Indem innerhalb des Gehäuses zusätzlich elastisch dynamisch verformbare Elastomerdichtungen angebracht sind, die den Spaltraum mit dem Dämpfungsmedium von dem Raum um die Federelemente trennen (DE-GM 84 18 913). Diese zusätzliche Maßnahme ist sehr aufwendig und stellt hohe Anforderungen an das Dichtungsmaterial.
In der DE-OS 21 17 930 ist ein Drehschwingungsdämpfer beschrieben, bei dem die Abstimmelemente als Gummlfeder oder einem anderen Elastomerteil ausgebildet sind. Diese Elemente haben außerdem die Aufgabe, eine radiale und axiale Lagerung der Schwungmasse gegenüber dem Nabenteil zu gewährleisten und weiterhin den Spaltraum gegen die Umgebung abzudichten. Dabei wird der Gummiring gleichzeitig zu einer dynamisch beanspruchten Dichtung. In der Praxis führt das zu Problemen bei der Befestigung des Gummiringes. Er kann entweder geklebt werden, was zu einer ungenügenden Anlage führen kann, die weder die Dichtfunktion noch die Abstimmfunktion in vollem Umfang gewährleistet, oder er kann anvulkanisiert werden. Das bedeutet aber, wie bei einem Schwingungsdämpfer nach DE-OS 40 39 633, den Einsatz weiterer Ringscheiben, die zusätzlich statisch abgedichtet werden müssen. Außerdem sind die bekannten Gummiwerkstoffe gegen den chemischen Einfluß des warmen Silikonöls nicht dauerhaft beständig.
Bekannt ist es auch, als Abstimmelemente Drehstabfedern anzuordnen (DE-OS 36 10 321). Dabei handelt es sich um Spezialteile, die für jeden Anwendungsfall gesondert hergestellt werden müssen und zu einem erhöhten Kostenaufwand führen.

Die Aufgabe der Erfindung bestand darin, einen Drehschwingungsdämpfer mit viscosem Dämpfermedium zu schaffen, der sich durch einen einfachen konstruktiven Aufbau auszeichnet, leicht zu montieren ist, den Einbau zusätzlicher Abstimmelemente ohne zusätzliche Abdichtung ermöglicht und bei dem sich die Verdrängerwirkung des Dampfermediums nicht auf die Funktion der Abstimmelemente auswirkt.

Erfindungsgemäß wird die Aufgabe dadurch gelöst, daß die Abstimmelemente auf einem kleineren Radius als der Spaltraum angeordnet sind und aus Ringsegmenten bestehen, die versetzt zueinander, alternierend an dem Nabenteil und der Schwungmasse in einem Abstand zueinander angeordnet sind, wobei zwischen den Ringsegementen ein elastisches Element angeordnet ist, das an mindestens einem der Ringsegmente befestigt ist, und der Spaltraum mit einem Ausgleichsraum zur Aufnahme von im Betriebszustand aus diesem entweichendem Fluid verbunden ist, und das Füllvolumen des im Drehschwingungsdämpfer befindlichen viscosen Fluids dem Volumen des Spaltraumes entspricht.
Als elastisches Element kann zwischen den Ringsegmenten eine Feder angeordnet sein. Die Feder ist z.B. als Druckfeder ausgebildet und auf einem Dorn geführt, der an dem Ringsegement befestigt ist. In der Praxis hat es sich als vorteilhaft erwiesen, wenn jeweils an den beiden Seiten des Ringsegmentes ein Dorn befestigt ist. Als radiales Lager für die Schwungmasse ist zwischen dem Nabenteil und der Schwungmasse ein Lagerband schwimmend angeordnet.
Die Schwungmasse kann bei dem erfindungsgemäßen Schwingungsdämpfer sowohl innen als auch außen liegend angeordnet sein.

Bei der Variante mit außen liegender Schwungmasse besteht die Schwungmasse aus einem Ring und zwei Deckeln, die miteinander verbunden sind, wobei zwischen den beiden Deckeln und dem Ring ein Dichtring angeordnet ist.
Der Hohlraum in Richtung zur axialen Welle ist mit einer als Torsionsmanschette ausgebildeten Dichtung abgedichtet. Diese ist an dem Nabenteil und den beiden Deckeln befestigt und unter Vorspannung moniert. Die Torsionsmanschette kann beispielsweise als Faltenbalg ausgebildet sein. Die aus dem Schwingwinkel resultierende Relativbewegung der Schwungmasse gegenüber dem Nabenteil wird durch die Länge des Faltenbalges kompensiert.
Entsprechend den praktischen Anforderungen kann der zur Dämpfung dienende Spaltraum auch vergrößert werden, indem in die Schwungmasse zusätzliche Ringe eingebaut werden. Die Schwungmasse ist axial in Lagerelementen gelagert, die in den nabenseitigen Ringsegementen angeordnet sind.
Bei einer Variante mit innen liegender Schwungmasse ist das Nabenteil anders ausgebildet und besitzt einen ringförmigen Hohlraum. In diesem ist die als Ring ausgebildete Schwungmasse drehbar gelagert. Außerdem sind die Abstimmelemente in diesem Hohlraum angeordnet. Die Abstimmelemente weisen die gleiche konstruktive Ausbildung auf, wie bei der Variante mit außen liegender Schwungmasse. Der ringförmige Hohlraum des Nabenteiles ist mittels eines Deckels verschließbar. Zwischen dem Deckel und den radialen Stegen des Nabenteiles ist noch ein Dichtring angeordnet. Die als Ring ausgebildete Schwungmasse ist axial in Lagerelementen gelagert, die in den schwungradseitigen Ringsegmenten angeordnet sind.

Der erfindungsgemäße Schwingungsdämpfer weist folgende Vorteile auf.
Dadurch, daß der gesamte dämpfungswirksame Spaltraum ausschließlich auf einem größeren Radius liegt als die Abstimmelemente, kann auf eine kosten- und montageaufwendige Abdichtung der Abstimmelemente verzichtet werden.
Infolge der relativ geringen Menge an erforderlichem viscosem Fluid - das Füllvolumen entspricht dem Spaltraumvolumen - kommt es zu keiner Beeinträchtigung infolge einer Verdrängerwirkung des viscosen Fluids im Betriebszustand. Die Füllmenge beträgt nur ein Bruchteil des gesamten abgedichteten Raumes. Im Betriebszustand des Dämpfers bewegt sich das Fluid infolge der Fliehkraft nach außen in den Dämpfungsspaltraum und gewährleistet eine optimale Dämpfung.
Neben dem Vorteil einer einfachen Abstimmbarkeit durch die federbelasteten Abstimmelemente bietet der erfindungsgemäße Dämpfer durch die Anordnung der Schwungmasse um das Nabenteil einen weiteren Vorteil. Die Schwungmasse kann leicht in ihrer Masse und damit in ihrem Massenträgheitsmoment verändert werden. Dadurch können ohne große Veränderungen an den funktionsentscheidenden Bauteilen Schwingungsdämpfer unterschiedlicher Größe und mit unterschiedlichen Parametern entstehen. Die lösbare Verbindung aller Teile gestattet darüber hinaus eine problemlose Wartung und kostengünstige Regenerierung.
Der Schwingungsdämpfer zeichnet sich ferner durch einen einfachen konstruktiven Aufbau aus und ist leicht zu montieren.

Die Erfindung soll nachstehend an einem Ausführungsbeispiel näher erläutert werden. In der zugehörigen Zeichnung zeigen
- Fig. 1: einen Längsschnitt durch einen Drehschwingungsdämpfer mit außen liegender Schwungmasse,
- Fig. 2: einen Querschnitt gemäß der Linie A-A in Fig. 1,
- Fig. 3: einen äußeren radialen Teil des Drehschwingungsdämpfers im Längsschnitt in vergrößerter Darstellung,
- Fig. 4: einen äußeren radialen Teil einer Variante des Drehschwingungsdämpfers mit einem vergrößerten Spaltraum im Längsschnitt in vergrößerter Darstellung,
- Fig. 5: einen Längsschnitt durch einen Drehschwingungsdämpfer mit innen liegender Schwungmasse.

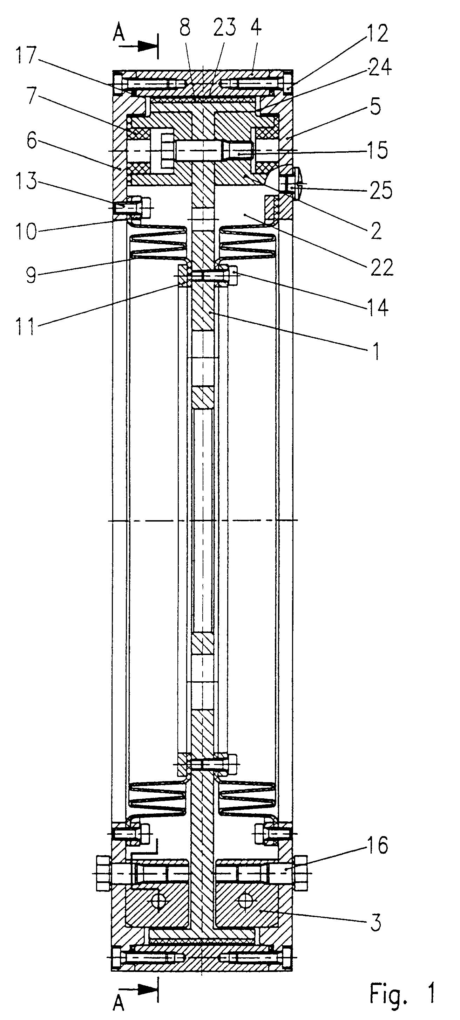

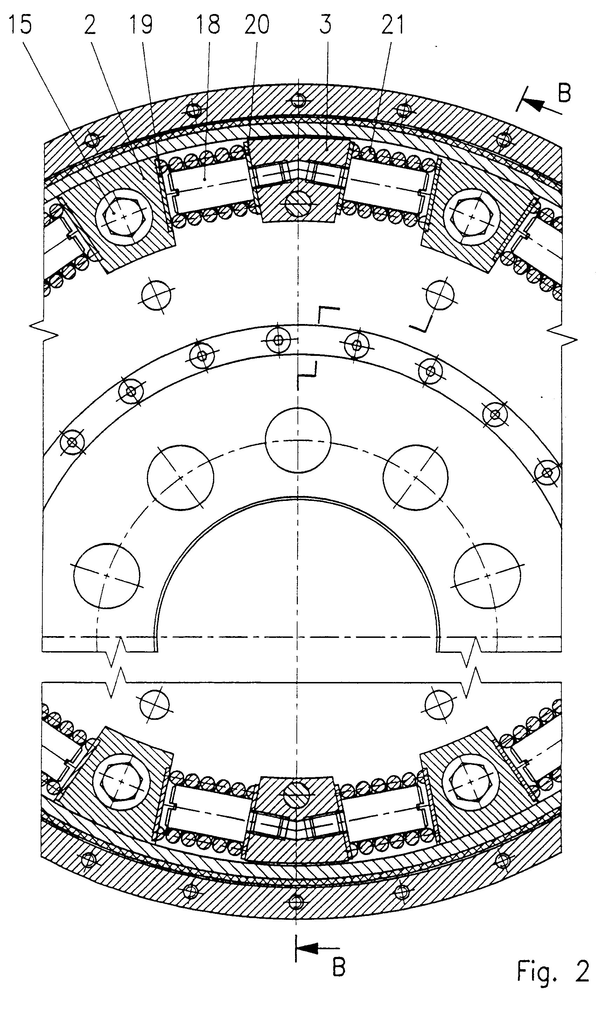

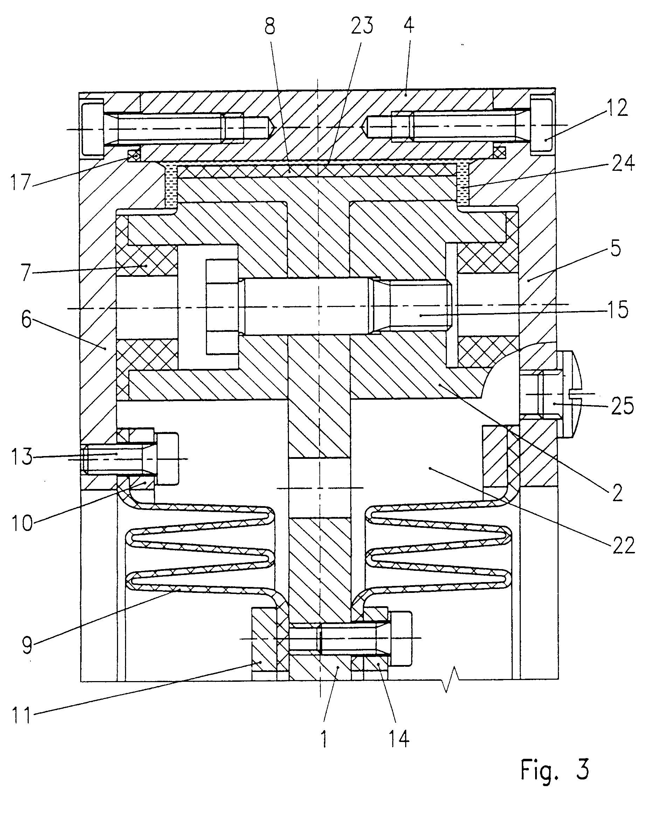

Der in den Figuren 1 bis 3 dargestellte Drehschwingungsdämpfer besteht aus einem Nabenteil 1, das mit der zu dämpfenden Welle verbunden wird. Der Längsschnitt der Fig. 1 erfolgte entsprechend dem in Fig. 2 gezeigten Schnittverlauf B-B. Das Nabenteil 1 ist von einer Schwungmasse umgeben, die aus dem Ring 4 und den zwei Deckeln 5, 6 besteht. Die beiden Deckel 5, 6 sind an dem Ring 4 mittels Schrauben 12 befestigt. Im Bereich dieser Verbindung ist der zwischen dem Nabenteil 1 und der Schwungmasse befindliche Spaltraum 23 durch einen Dichtring 17 abgedichtet. Der Arbeitsraum für das viscose Dämpfungsmedium, der durch den Spaltraum 23 und den Ausgleichsraum 24 gebildet ist, befindet sich somit auf einer radialen Ebene außerhalb des Wirkungsbereiches der Abstimmelemente. Die Abstimmelemente bestehen aus Ringsegmenten 2, 3 den Druckfedern 21 und den Dornen 18. Die Druckfedern 21 sind zwischen den Ringsegementen 2, 3 und auf entsprechende Dornen 18 geführt. Die Ringsegmente 2 sind mittels Paßschrauben 15 mit dem Nabenteil 1 verbunden. Die Ringsegmente 3 sind durch Paßschrauben 16 mit der Schwungmasse verbunden. An den schwungradseitigen Ringsegmenten 3 ist beidseitig in Umfangsrichtung je ein Dorn 18 befestigt, auf dem die Druckfeder 21 geführt ist.. Die Druckfedern 21 stützen sich auf als Schreiben 19, 20 ausgebildete Auflageflächen ab, wobei die Scheibe 19 an dem nabenseitigen Ringsegment 2 und die Scheibe 20 an dem schwungradseitigen Ringsegement 3 angeordnet ist. Die einseitig an den Ringsegementen 3 befestigten Dorne 18 dienen gleichzeitig als Begrenzung für den Federweg der Druckfeder 21 und damit für die Begrenzung des Schwingwinkels. Die axialen Lagerelemente 7 sind in den nabenseitigen Ringsegmenten 2 angeordnet. Als radiales Lager dient ein zwischen dem Nabenteil 1 und dem Ring 4 angeordnetes Lagerband 8. Der Spaltraum 23, in dem sich während des Betriebszustandes das viscose Dämpfungsmedium befindet, liegt zwischen dem Lagerband 8 und dem Ring 4 der Schwungmasse. Zur Abdichtung zwischen dem Nabenteil 1 und den beiden Deckein 5, 6 der Schwungmasse ist eine als Faltenbalg ausgebildete Torsionsmanschette angeordnet. Dieser Faltenbalg 9 besteht aus PTFE-Material und ist mittels eines Halteringes 10 und Schrauben 13 an den Deckeln 5, 6 und mittels eines Halteringes 11 und Schrauben 14 an dem Nabenteil 1 befestigt. Um seine Dichtwirkung auch nach einem Setzen des Werkstoffes des Faltenbalges 9 abzusichern, ist er mit einer Vorspannung montiert. Die Relativbewegung zwischen dem Nabenteil 1 und der Schwungmasse wird von den Falten kompensiert. Die Anzahl und Form der Falten ist von der Größe des maximal zulässigen Schwingwinkels abhängig. Der Faltenbalg 9 stellt an seinen Verbindungsstellen sowohl zur Schwungmasse, als auch zum Nabenteil 1 eine statische Dichtung dar. Dadurch wird die Montage wesentlich vereinfacht.
Die aus dem Schwingwinkel resultierende Relativbewegung der Schwungmasse gegenüber dem Nabenteil 1 wird durch die Länge des Faltenbalges 9 kompensiert. Die Auslegung und Anordnung des Federweges der Druckfeder 21 gewährleistet, daß die Verdrehung beider Teile nicht größer wird, als vom Faltenbalg 9 kompensiert werden kann. Der PTFE-Werkstoff dieses Dichtelementes ist so gewählt, daß er keinerlei chemischer Beeinflussung durch das viscose Fluid unterliegt und nicht durch vorzeitige Alterung die Funktion des Dämpfers gefährdet.
Zwischen dem Faltenbalg 9 und den Abstimmelementen befindet sich ein konzentrischer Hohlraum 22 in den das Dämpfungsmedium eingebracht wird. Dies erfolgt über eine in dem Deckel 5 angebrachte Öffnung, die mittels einer Verschlußschraube 25 verschließbar ist. Als Dämpfungsmedium wird Silikonöl verwendet. Infolge der konstruktiven Auslegung des Drehschwingungsdämpfers kann die benötigte Silikonölmenge relativ gering gehalten werden. Es muß lediglich nur so viel Silikonöl zugegeben werden, damit der zwischen dem Lagerband 8 und dem Ring 4 gebildete Spaltraum 23 vollständig ausgefüllt ist. Bedingt durch die im Betriebszustand auftretenden höheren Temperaturen und die damit verbundene Expansion des Silikonöls, ist zusätzlich noch ein Ausgleichsraum 24 für das entweichende Silikonöl vorgesehen. Diese Einzelheiten sind besonders deutlich in der Fig. 3 dargestellt.

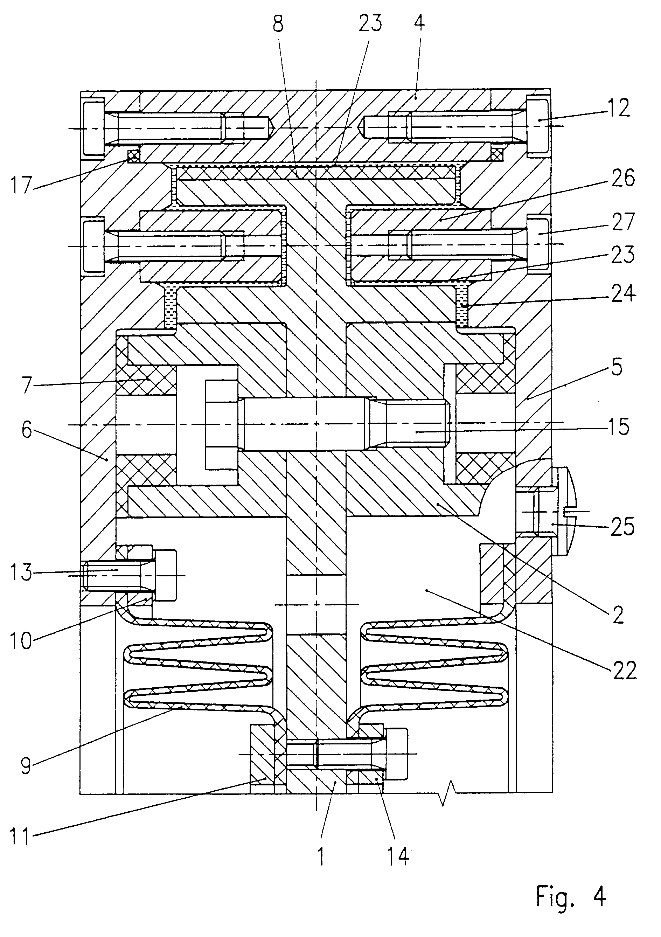

In der Fig. 4 ist eine Ausführungsvariante mit einem vergrößerten Spaltraum 23 dargestellt. Die Vergrößerung des Spaltraumes 23 erfolgt durch zusätzlich eingebaute Ringe 26, die mittels Schrauben 27 an den Deckeln 5, 6, die mit als Schwungmasse dienen, befestigt sind. Das Nabenteil 1 ist bei dieser Variante im Vergleich zu dem Nabenteil gemäß der Variante in den Figuren 1 bis 3 größer ausgebildet und weist entsprechende Ausnehmungen zur Aufnahme der Ringe 26 auf. Zwischen dem Nabenteil 1 und den Ringen 26 entsteht somit ein verlängerter Spaltraum 23, der im Betriebszustand vollständig mit Silikonöl gefüllt ist.
Analog wie bei der Variante gemäß den Figuren 1 bis 3 ist auch ein Ausgleichsraum 24 vorgesehen. Alle übrigen Bauteile entsprechen denen der in den Figuren 1 bis 3 gezeigten Variante.

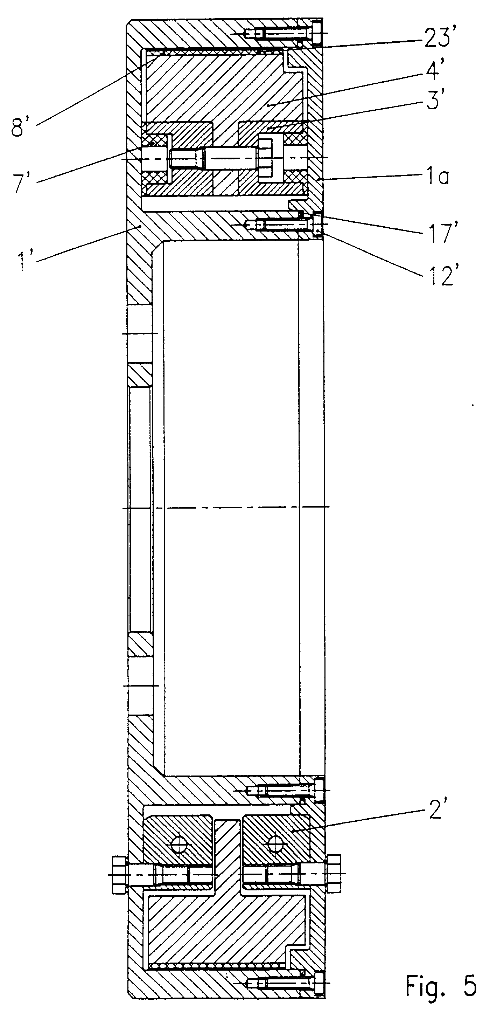

In der Fig. 5 ist eine weitere Variante dargestellt, bei der im Vergleich zu den vorhergehenden Varianten die Schwungmasse nicht außen liegend, sondern innen liegend angeordnet ist. Dieser Schwingungsdämpfer weist ein Nabenteil 1' auf, an dem der Deckel 1a mittels Schrauben 12' befestigt ist.
Die Schwungmasse besteht aus einem Ring 4'. Der dämpfungswirksame Spaltraum 23' wird zwischen dem radialen Bereich des Nabenteils 1' und dem die Schwungmasse umgebenden Lagerband 8' gebildet. Bedingt durch die innen liegend angeordnete Schwungmasse weist zwangsläufig das Nabenteil 1' im Vergleich zu den Nabenteil 1 in Fig. 1 eine andere geometrische Form auf. Die Abstimmelemente sind analog wie bei der Variante gemäß den Figuren 1 bis 4 angeordnet. Die Abdichtung zwischen dem Nabenteil 1' und der Schwungmasse erfolgt ausschließlich durch den Deckel 1a, mit dem eingelegten Dichtring 17'. Zur axialen Lagerung sind in dem Ringsegmenten 3 Lagerelemente 7' vorgesehen. Zur radialen Lagerung ist ein Lagerband 8' angeordnet.

Die Wirkungsweise des Schwingungsdämpfers ist folgende.

Das Nabenteil des Schwingungsdämpfers wird an der zu dämpfenden Welle befestigt. In diesem Ruhezustand befindet sich das Silikonöl infolge der Schwerkraft im wesentlichen im unteren Teil des Dämpfers. Im Anfahrzustand ist der Schwingungsdämpfer zunächst quasi blockiert, denn infolge der Massenträgheit liegt die Schwungmasse mit ihren Ringsegementen auf einer Seite an den Dornen an.
Gleichzeitig bewegt sich das auf einem relativ kleinen Raum zusammengeflossene viscose Fluid infolge der Fliehkraft nach außen auf den größten Durchmesser des Hohlraumes und damit in den Dämpfungsspalt. Wenn die Drehschwingungen der Welle bei höherer Drehzahl die bei der Beschleunigung des Anfahrens wirkende Massentragheit der Schwungmasse überwinden, löst sich ihre Blockierung und der Schwingungsdämpfer wird wirksam.
Während des Betriebszustandes befindet sich das Silikonöl ausschließlich in dem dafür vorgesehenen Spaltraum. Bedingt durch die Expansion des Silikonöls bei höheren Temperaturen kann die aus dem Spaltraum entweichende überflüssige Menge in den Ausgleichsraum fließen. Der Schwingungsdämpfer arbeitet mit einer vergleichsweise geringen Menge an Silikonöl, und dadurch, daß sich der Dämpfungsspalt außerhalb des Wirkungsbereiches der zusätzlich angeordneten Abstimmelemente befindet, ist eine unerwünschte Verdrängerwirkung des Dämpfungsmediums auf die Abstimmelemente von vornherein ausgeschlossen. Der Schwingungsdämpfer zeichnet sich durch einen äußerst einfachen konstruktiven Aufbau aus und ist leicht zu montieren.

## Patentansprüche

1. Drehschwingungsdämpfer mit viscosem Dämpfermedium, insbesondere für Kolbenmaschinen, bestehend aus einem Nabenteil, das an der zu dämpfenden Welle befestigt ist, und einer Schwungmasse, wobei zwischen der Schwungmasse und dem Nabenteil ein Spaltraum zur Aufnahme des viscosen Fluids angeordnet ist, sowie Abstimmelementen, dadurch gekennzeichnet, daß die Abstimmelemente (2, 2', 3, 3', 18, 21) auf einem kleineren Radius als der Spaltraum (23, 23') angeordnet sind und aus Ringsegementen (2, 2', 3, 3') bestehen, die versetzt zueinander, alternierend an dem Nabenteil (1, 1') und der Schwungmasse (4, 4', 5, 6) in einem Abstand zueinander angeordnet sind, wobei zwischen den Ringsegmenten (2, 2', 3, 3') ein elastisches Element angeordnet ist, das an mindestens einem der Ringsegmente (2, 2', 3, 3') befestigt ist, und der Spaltraum (23, 23') mit einem Ausgleichsraum (24) zur Aufnahme von im Betriebszustand aus diesem entweichendem Fluid verbunden ist, und das Füllvolumen des im Drehschwingungsdämpfer befindlichen viscosen Fluid dem Volumen des Spaltraumes (23, 23') entspricht.

2. Drehschwingungsdämpfer nach Anspruch 1, dadurch gekennzeichnet, daß als elastisches Element zwischen den Ringsegmenten (2, 2', 3, 3') eine Feder angeordnet ist.

3. Drehschwingungsdämpfer nach den Ansprüchen 1 und 2, dadurch gekennzeichnet, daß die Feder als Druckfeder (21) ausgebildet ist und auf einem Dorn (18) geführt ist, der an dem Ringsegement (3, 3') befestigt ist.

4. Drehschwingungsdämpfer nach Anspruch 3, dadurch gekennzeichnet, daß an dem Ringsegment (3, 3') jeweils an den beiden Seiten ein Dorn (18) befestigt ist.

5. Drehschwingungsdämpfer nach einem der Ansprüche 1 bis 4, dadurch gekennzeichnet, daß als radiales Lager für die Schwungmasse zwischen dem Nabenteil (1, 1') und der Schwungmasse ein Lagerband (8, 8') schwimmend angeordnet ist.

6. Drehschwingungsdämpfer nach einem der Ansprüche 1 bis 5, dadurch gekennzeichnet, daß die Schwungmasse außen liegend angeordnet ist.

7. Drehschwingungsdämpfer nach einem der Ansprüche 1 bis 5, dadurch gekennzeichnet, daß die Schwungmasse innen liegend angeordnet ist.

8. Drehschwingungsdämpfer nach einem der Ansprüche 1 bis 6, dadurch gekennzeichnet, daß die Schwungmasse aus einem Ring (4) und zwei Deckein (5, 6) besteht, die miteinander verbunden sind, wobei zwischen den beiden Deckeln (5, 6) und dem Ring (4) ein Dichtring (17) angeordnet ist.

9. Drehschwingungsdämpfer nach einem der Ansprüche 1 bis 6 und 8, dadurch gekennzeichnet, daß der Hohlraum (22) in Richtung zur axialen Welle mit einer als Torsionsmanschette (9) ausgebildeten Dichtung abgedichtet ist, wobei die Torsionsmanschette (9) an dem Nabenteil (1) und den beiden Deckein (5, 6) befestigt und unter Vorspannung montiert ist.

10. Drehschwingungsdämpfer nach Anspruch 9, dadurch gekennzeichnet, daß die Torsionsmanschette (9) als Faltenbalg ausgebildet ist.

11. Drehschwingungsdämpfer nach einem der Ansprüche 1 bis 6 und 8 bis 10, dadurch gekennzeichnet, daß zur Vergrößerung des Spaltraumes (23) die Schwungmasse mit zusätzlichen Ringen (26) versehen ist.

12. Drehschwingungsdämpfer nach einem der Ansprüche 1 bis 6 und 8 bis 11, dadurch gekennzeichnet, daß die Schwungmasse axial in Lagerelementen (7) gelagert ist, die in den nabenseitigen Ringsegmenten (2) angeordnet sind.

13. Drehschwingungsdämpfer nach einem der Ansprüche 1 bis 5 und 7, dadurch gekennzeichnet, daß in dem Nabenteil (1') ein ringförmiger Hohlraum angeordnet ist, in dem eine als Ring (4') ausgebildete Schwungmasse drehbar gelagert ist und die Abstimmelemente (2', 3') angeordnet sind, und der ringförmige Hohlraum mittels eines Deckels (1a), sowie Schrauben (12') verschließbar ist, wobei zwischen dem Deckel (1a) und den radialen Stegen des Nabenteiles (1') ein Dichtring (17') angeordnet ist.

14. Drehschwingungsdämpfer nach einem der Ansprüche 1 bis 5, 7 und 13, dadurch gekennzeichnet, daß die als Ring (4') ausgebildete Schwungmasse axial in Lagerelementen (7') gelagert ist, die in den schwungradseitigen Ringsegmenten (3') angeordnet sind.
